# EUROPÄISCHE PATENTSCHRIFT

(11) **EP 1 202 883 B1**
(45) Veröffentlichungstag und Bekanntmachung des Hinweises auf die Patenterteilung: **23.04.2003**
(21) Anmeldenummer: 00960430.7
(22) Anmeldetag: 10.08.2000
(51) Int. Cl.: B60R 25/04

(54) **VORRICHTUNG ZUM STARTEN EINES FAHRZEUGMOTORS MITTELS EINES ELEKTRONISCHEN SCHLÜSSELS**
DEVICE FOR STARTING A MOTOR VEHICLE MOTOR, USING AN ELECTRONIC KEY
DISPOSITIF POUR DEMARRER UN MOTEUR DE VEHICULE AU MOYEN D'UNE CLE ELECTRONIQUE

(30) Priorität: 21.08.1999 DE 19939733
(43) Veröffentlichungstag der Anmeldung: 08.05.2002
(73) Patentinhaber: HUF HÜLSBECK & FÜRST GMBH & CO. KG, 42551 Velbert (DE)
(72) Erfinder: WITTWER, Reinhard, 42579 Heiligenhaus (DE); BARRENBERG, Günter, 42551 Velbert (DE)
(74) Vertreter: Mentzel, Norbert, Dipl.-Phys.
(86) Internationale Anmeldenummer: EP0007769
(87) Internationale Veröffentlichungsnummer: WO01014179

(56) Entgegenhaltungen:
- WO-A-00/29267
- DE-A- 3 306 863
- DE-A- 19 747 732
- DE-C- 19 641 898
- US-A- 5 254 996

## Beschreibung

Die Erfindung richtet sich auf eine Vorrichtung der im Oberbegriff des Anspruches 1 angegebenen Art. Solche Vorrichtungen werden üblicherweise als elektronisches "Zündschloss" bzw. "Zünd-Lenk-Schloss" bezeichnet. Mit einem elektronischen Schlüssel wird üblicherweise der Zugang zum Fahrzeug gesichert und entsichert. Dafür sind geeignete Türschlösser vorgesehen. Bei der Verwendung dieses Schlüssel bei der hier interessierenden Vorrichtung wird der Schlüssel in eine im Kraftfahrzeug vorgesehene Aufnahme eingesteckt. In manchen Fällen wird dabei eine dort vorgesehene Abdeckung weggedrückt. Zur Steuerung von verschiedenen Funktionen im Kraftfahrzeug wird der eingesteckte Schlüssel in der Aufnahme in verschiedene Schlüssellagen überführt.

Bei der bekannten Vorrichtung dieser Art (DE 44 34 655 A1) werden die verschiedenen Funktionen durch entsprechende Drehstellungen des elektronischen Schlüssels in der Aufnahme angewählt. Dazu besteht die Aufnahme aus einem Rotor und einem Stator und verschiedenen Sensoren am Stator, welche die verschiedenen Drehstellungen des Rotors zu ermitteln haben. Das ist bau- und platzaufwendig. Um das erforderliche Drehmoment zur Verstellung des Schlüssels manuell ausüben zu können, muss der Schlüssel ausreichend weit aus der Öffnung der Aufnahme herausragen. Ein weit herausragender Schlüssel erhöht aber beim Crashfall des Fahrzeugs die Verletzungsgefahr. Zusätzlich oder alternativ zur rotatorischen Bewegung kann auch eine translatorische Bewegung des Schlüssels stattfinden.

Bei einer Vorrichtung anderer Art (DE 198 14 964 A1) wird das Fahrberechtigungssignal durch eine Detektion eines Fingerabdrucks der berechtigten Person erzeugt. Dabei wird ein Autorisierungselement in Form einer Scheckkarte verwendet, welche in einen Schlitz neben einem Wippschalter oder in einem Drehschalter eingeführt wird. Der Drehschalter und der Wippschalter besitzen Sensoren für den Fingerabdruck und sind zwischen verschiedenen Schalterlagen druckbetätigbar oder verdrehbar. Dadurch werden verschiedene Funktionen des Motors gesteuert. In diesem Fall sind außer der Einsteckbewegung des Autorisierungselements sowohl eine Drehung oder Druckbewegung eines Schalters als auch die Anbringung eines Fingerabdrucks an der den Sensor aufweisenden Stelle erforderlich. Diese komplexe Betätigung ist umständlich.

Schließlich ist es bekannt, bei einem Startschalter für ein Kraftfahrzeug (DE 195 04 991 C1) in einem Drehgriff einen Schacht zur vollständigen Einführung einer Identifikationskarte vorzusehen. Diese Einführung ist nur in einer ersten Position des Drehgriffs möglich. Von dieser Position ausgehend kann dann der Drehgriff mit der eingesteckten Karte in verschiedene weitere Drehpositionen überführt werden, welche verschiedene Funktionen des Motors steuert. In diesem Fall sind außer den Steckbewegungen auch noch rotative Bewegungen des Drehgriffs erforderlich.

Des Weiteren ist aus der DE 33 06 863 (Oberbegriff des Anspruchs 1) eine Vorrichtung zum Starten eines Kraftfahrzeugmotors mittels eines elektronischen Schlüssels bekannt. Der elektronische Schlüssel ist zwischen mehreren axial versetzten Hublagen längsverschieblich, wobei die elektrischen Kontakte im Zusammenwirken mit einer Sender-Empfängereinheit in den einzelnen Hublagen verschiedene Funktionen 'aktiviert. Der elektronische Schlüssel wird in den Hublagen durch Rasten oder aber durch einen manuell schwenkbaren Sperrhebel gesichert. Nachteilig ist, dass für die nacheinander ablaufenden Arbeitsvorgänge je eine neue Hublage benötigt wird. Des Weiteren muss bei dieser Vorrichtung nach dem Einschieben des elektronischen Schlüssels bis in die Endlage zum Starten des Motors der elektronische Schlüssel solange durch Druck in der Endlage gehalten werden, bis der Motor läuft. Diese Handhabung ist etwas umständlich. Die Zuordnung von jeweils einem Arbeitsvorgang zu einer Hublage des elektronischen Schlüssels führt dazu, dass diese Vorrichtung entsprechend groß dimensioniert werden muss.

Der Erfindung liegt die Aufgabe zugrunde, eine zuverlässige, bequem betätigbare Vorrichtung der im Oberbegriff des Anspruches 1 genannten Art zu entwickeln, welche die vorerwähnten Nachteile vermeidet. Dies wird erfindungsgemäß durch die im Kennzeichen des Anspruches 1 angeführten Maßnahmen erreicht, denen folgende besondere Bedeutung zukommt.

Bei der Erfindung wird der Schlüssel zur Funktionsauswahl nicht gedreht. Der Schlüssel wird vielmehr beim Einschieben in die Aufnahme in drei zueinander axial versetzte Hublagen überführt, von denen aber für die Zündung des Motors die zweite Hublage maßgeblich ist. In dieser zweiten Hublage ist der Schlüssel nahezu ganz in der Aufnahme eingeführt. In dieser zweiten Hublage und in der noch tieferen dritten Hublage werden die wesentlichsten Funktionen im Kraftfahrzeug ausgeführt, wofür fallweise weitere manuelle Betätiger oder Pedale genutzt werden. Der Kraftfahrzeugbenutzer braucht nicht am Schlüssel Betätigungen auszuführen, um die gewünschten Funktionen im Fahrzeug auszulösen. Der Schlüssel bleibt vielmehr in der Aufnahme weitgehend versenkt, weshalb im Crashfall keine Verletzungsgefahr durch weit herausragende Schlüsselteile zu befürchten ist.

In seiner zweiten Hublage ist der Schlüssel durch ein Richtgesperre in der Aufnahme fixiert, dessen formschlüssige Haltemittel den Schlüssel gegenüber einer axialen Federkraft sichern. Um den Schlüssel wieder entnehmen zu können, genügt es ihn an seinem Ende anzutippen. Dann wird der Schlüssel in seine dritte Hublage überführt. Das Schlüsselende kann sich dabei beliebig tief in der Aufnahme befinden. In dieser dritten Hublage kann die Verriegelung fallweise freigegeben werden. Dann wird der Schlüssel aufgrund einer auf ihn mittelbar oder unmittelbar einwirkenden axialen Rückstellfederung wieder in seine Anfangslage zurückgedrückt. Dann liegt nur eine kraftschlüssige Verbindung eines Rastgesperres vor. Der Schlüssel kann manuell wieder entnommen werden. Bei der Erfindung sind folglich nur axiale Bewegungen des elektronischen Schlüssels zwischen mindestens drei Hublagen erforderlich, um den Motor oder weitere Zusatzgeräte im Kraftfahrzeug zu steuern. Diese axiale Bewegung ist mit dem Einstecken des Schlüssels in die Aufnahme des Fahrzeugs gleichgerichtet. Es liegt also eine sehr sinnfällige Handhabung des Schlüssels bei der erfindungsgemäßen Vorrichtung vor.

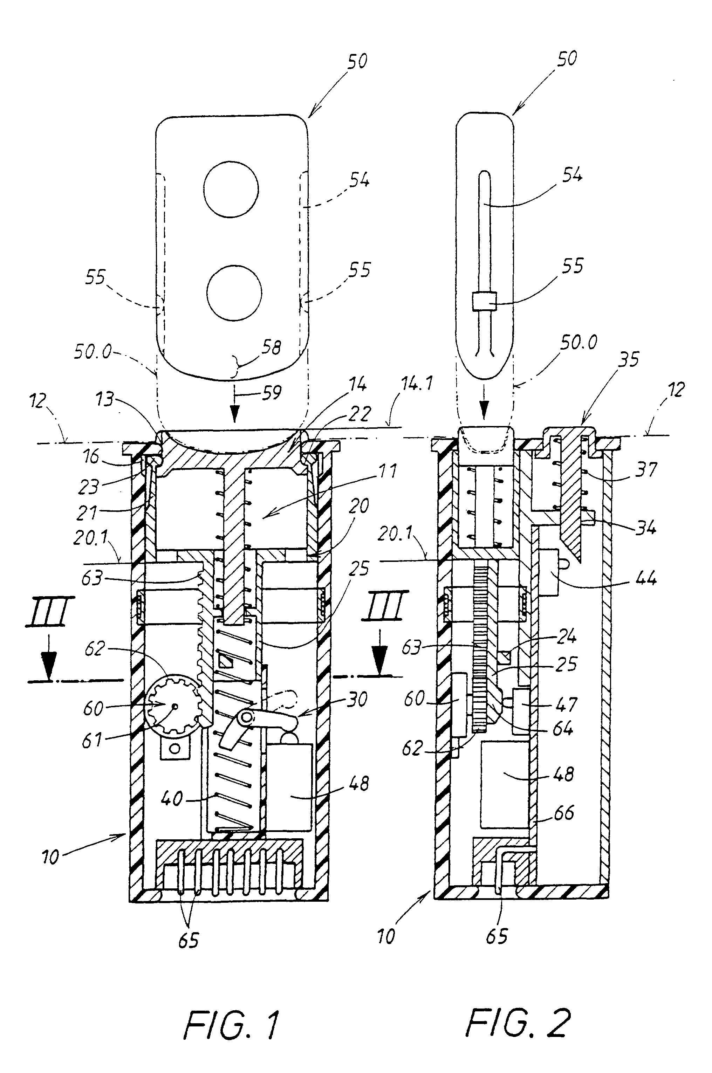

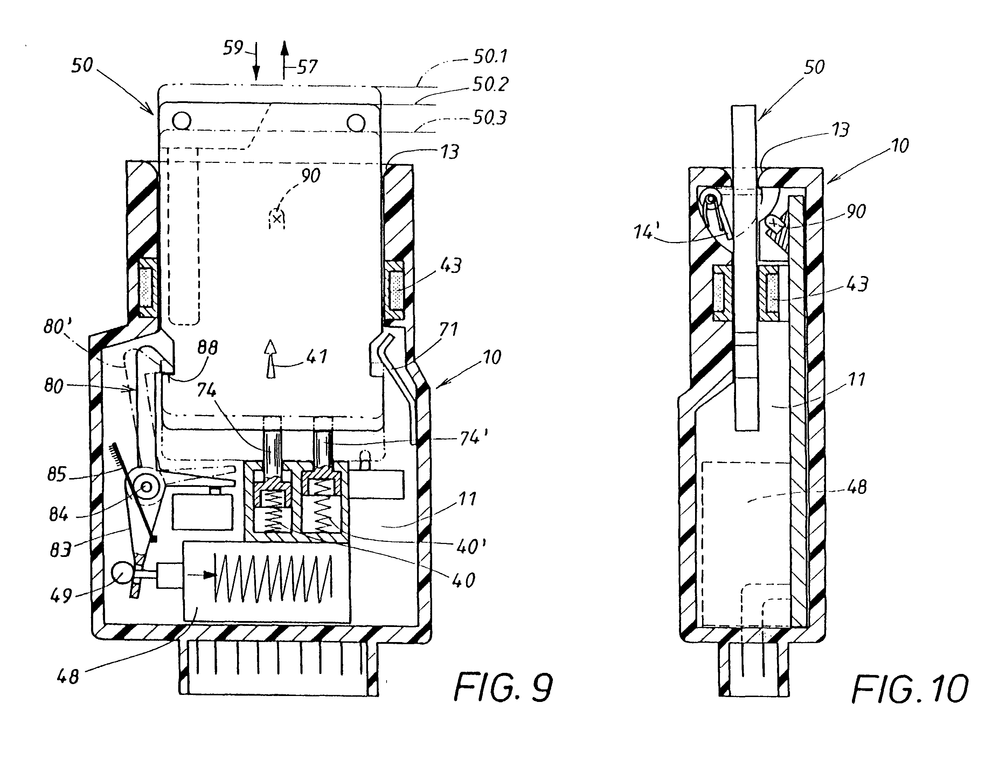

Weitere Maßnahmen und Vorteile der Erfindung ergeben sich aus den Unteransprüchen, der nachfolgenden Beschreibung und den Zeichnungen. In den Zeichnungen ist die Erfindung schematisch in zwei Ausführungsbeispielen dargestellt, von denen jedes der beiden von eigenständiger erfinderischer Bedeutung ist. Das erste Ausführungsbeispiel ist in den Fig. 1 bis 8 und das zweite Ausführunesbeispiel in den Fig. 9 bis 14 veranschaulicht. Es zeigen:
- Fig. 1,: einen Axialschnitt durch die Vorrichtung des ersten Ausführungsbeispiels. längs der Schnittlinie I - I von Fig. 3, wobei die Bauteile sich in einer Ausgangsstellung vor dem Einstecken eines zugehörigen elektronischen Schlüssels befinden,
- Fig. 2: die in Fig. 1 gezeigte Vorrichtung in einem demgegenüber rechtwinklig versetzten Axialschnitt, der in Fig. 3 mit II - II gekennzeichnet ist, bei gleicher Stellung der Bauteile,
- Fig. 3: einen Querschnitt durch die Vorrichtung, längs der in Fig. 1 mit III - III gekennzeichneten Schnittlinie.
- Fig. 4: die stirnseitige Draufsicht auf die Vorrichtung von Fig. 1 bis 3,
- Fig. 5,: in einer der Fig. 1 entsprechenden Darstellung eine erste Hublage der Bauteile, die sich nach einem anfänglichen Einstecken des elektronischen Schlüssels ergibt,
- Fig. 6: eine durch weiteres axiales Einstecken des Schlüssels in die Aufnahme von Fig. 5 sich ergebende zweite Hublage der Bauteile der in Fig. 1 gezeigten Vorrichtung,
- Fig. 7: eine gegenüber Fig. 6 noch ein wenig tiefer liegende Hublage des eingesteckten Schlüssels, um ihn aus der zweiten Hublage von Fig. 6 in die in Fig. 5 erläuterte erste Hublage zu überführen,
- Fig. 8: die Vorderansicht auf eine im Gehäuse der Vorrichtung vorgesehene Leiterplatte, teilweise im Einbauzustand im Gehäuse,
- Fig. 9: in Analogie zu Fig. 6, einen entsprechenden Axialschnitt durch das zweite Ausführungsbeispiel der erfindungsgemäßen Vorrichtung, wenn sich der Schlüssel in seiner zweiten Hublage befindet,
- Fig. 10: die in Fig. 9 gezeigte zweite Vorrichtung nach der Erfindung bei gleicher Stellung der Bauteile, allerdings in einem gegenüber Fig. 9 rechtwinklig versetzten Axialschnitt durch die Vorrichtung,
- Fig. 11: nur einige Bauteile der in Fig. 9 gezeigten Vorrichtung in einer Ausgangsstellung, die sich bei einem aus der Vorrichtung entnommenen Schlüssel ergibt und
- Fig. 12-14,: in einer der Fig. 11 entsprechenden Darstellung, die Stellung der Bauteile, wenn sich der Schlüssel in drei verschiedenen Hublagen befindet, in Analogie zu den in Fig. 5, 6 und 7 gezeigten Schlüssellagen des ersten Ausführungsbeispiels.

Das in Fig. 1 bis 8 gezeigte erste Ausführungsbeispiel der erfindungsgemäßen Vorrichtung besitzt eine Aufnahme 11 zum Halten eines elektronischen Schlüssels. Die Aufnahme 11 befindet sich im Inneren eines Gehäuses 10. Dieses Gehäuse 10 kann in einer Armatur im Fahrzeuginneren integriert sein, deren Kontur 12 strichpunktiert in Fig. 1 und 2 angedeutet ist. Die Fig. 1 bis 4 zeigen die Vorrichtung bei entnommenen Schlüssel 50. Dann ist die stirnseitige Öffnung 13 der Aufnahme 11 durch eine Abdeckung 14 verschlossen.

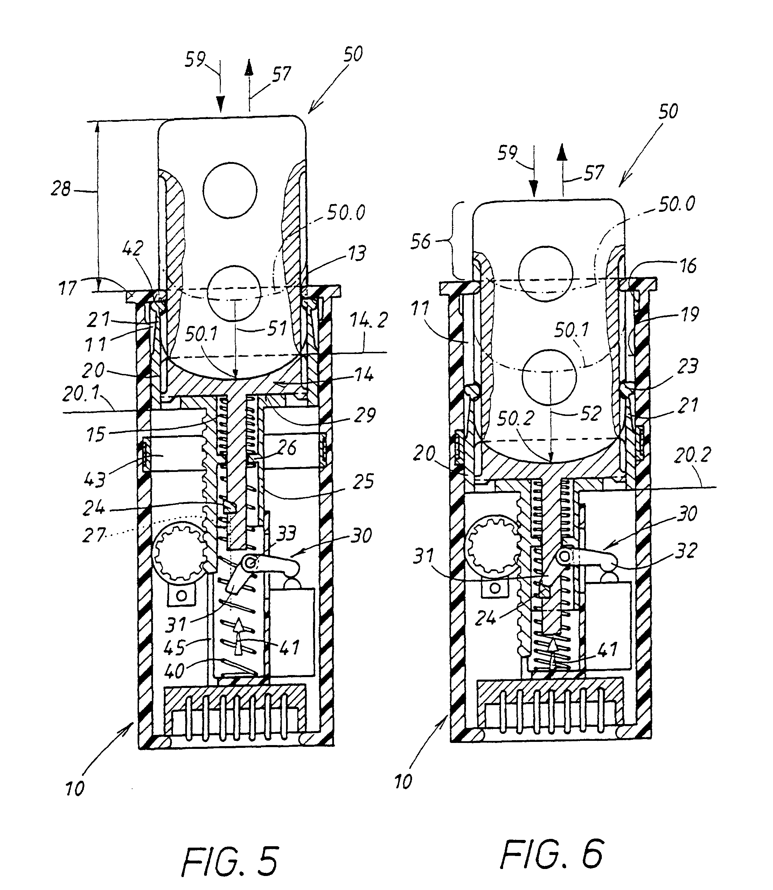

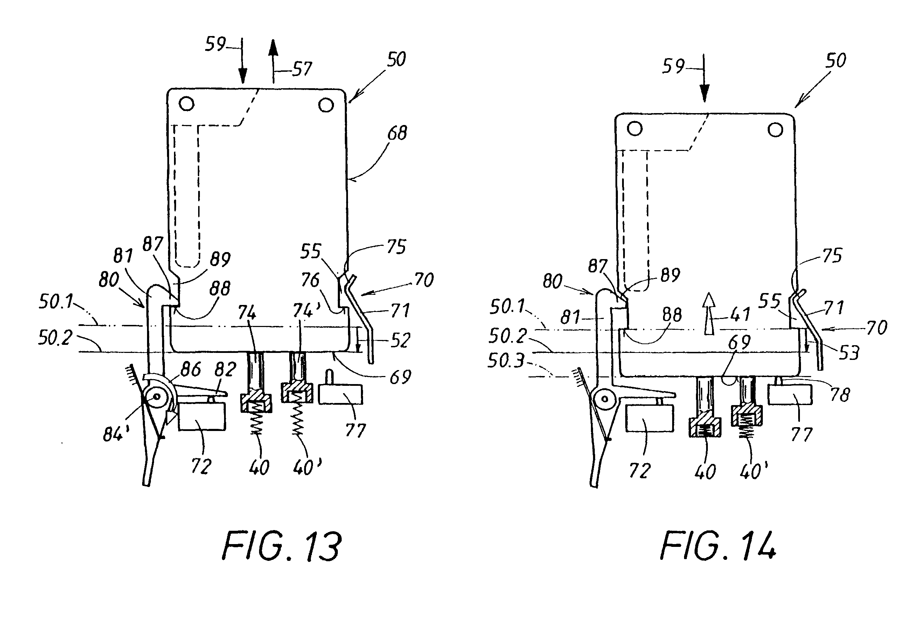

Die Abdeckung 14 ist relativ zu einem im Gehäuse 10 vorgesehenen Schieber 20 mit einer leichten Druckfeder 15 belastet und dort zwischen zwei Stellungen, nämlich 14.1 von Fig. 1 und 14.2 axial von Fig. 5 verschieblich. Diese beiden Stellungen 14.1 und 14.2 sind durch einen vorderen und einen hinteren Endanschlag 22, 29 im Schieber 20 bestimmt. Bei entnommenen Schlüssel gemäß Fig. 1 bis 4 liegt die vordere Ausschubstellung 14.1 der Abdeckung 14 vor, wo die Öffnung 13 verschlossen ist. Dann kann Schmutz in das Innere der Aufnahme 11 nicht eindringen. Die Abdeckung 14 befindet sich dann, unter Wirkung ihrer Druckfeder 15 am vorderen Endanschlag 22. Die andere Stellung 14.2 gemäß Fig. 5 wird auf folgende Weise erreicht.

Damit der Schlüssel 50 mit der Vorrichtung zusammenwirken kann, ist eine durch den Pfeil 59 in Fig. 1 und 2 verdeutlichte Einsteckbewegung des Schlüssels 50 in die Aufnahme 11 erforderlich. Dabei kommt der Schlüssel mit der Abdeckung 14 in Berührung. Das ist die strichpunktiert in Fig. 1 und 2 verdeutlichte axiale Lage 50.0. Dabei taucht der Schlüssel mit einem Vorderstück 58 in eine entsprechende Aussparung der Abdeckung 14 bereits ein, welche zu der nachfolgenden Aufnahme 11 im Gehäuse 10 noch hinzukommt. Diese Lage 50.0 des Schlüssels 50 soll nachfolgend kurz "Berührungslage" bezeichnet werden. Davon ausgehend sollen alle weiteren Hublagen des Schlüssels anhand von Fig. 5 bis 7 beschrieben werden.

Nach einer anfänglichen Einsteckbewegung 59 um eine aus Fig. 5 ersichtliche erste Hubstrecke 51 kommt der Schlüssel in seine in Fig. 5 mit 50.1 gekennzeichnete erste axiale Hublage. Dabei wird, wie bereits erwähnt wurde, die Abdeckung 14 zurückgedrückt und kommt an ihrem zweiten Endanschlag 29 im Inneren des Schiebers 20 zur Anlage. Die Öffnung 13 der Aufnahme ist zwar frei, aber jetzt durch den eingesteckten Schlüssel 50 verschlossen. Die Abdeckung 14 befindet sich dann in ihrer Einschubstellung 14.2. In dieser Hublage 50.1 wird der Schlüssel 50 kraftschlüssig in seiner Aufnahme 11 gehalten wofür die Halteelemente 21, 22, 55 sorgen, deren Aufbau am besten anhand von Fig. 1 zu erkennen ist. Der Schieber 20 ist dosenförmig ausgebildet, wobei die Dosenwand stellenweise eine radial federnde Zunge 21 aufweist, welche ein erstes Halteelement bildet. Diese Zunge 21 ist zunächst ein erster Bestandteil eines zwischen Schlüssel 50 und Schieber 20 bestehenden Rastgesperres. Am Ende der Zunge 21 befindet sich nämlich ein radialer Vorsprung 22, der ein weiteres Halteelement des Rastgesperres darstellt. Dieser Vorsprung 22 kann im Übrigen auch die bereits erwähnten Anschlagfunktionen in der Ausschubstellung 14.1 der Abdeckung 14 erfüllen. Beim Einstecken 59 des Schlüssels 50 führen die Zungen 21 kurzzeitig eine radiale Spreizbewegung aus, bis der an den Zungen 21 sitzende Vorsprung 22 in eine zugeordnete Rastvertiefung 55 am Schlüssel kraftschlüssig eingreift. Das ist in Fig. 5 gegeben. Die Rastvertiefung 55 ist ebenfalls Bestandteil des erwähnten Rastgesperres. Diese erste Hublage 50.1 soll nachfolgend kurz "Anfangslage" des Schlüssels bezeichnet werden. In dieser Anfangslage 50.1 liegt eine kraftschlüssige Sicherung des Schlüssels in der Aufnahme 11 vor.

Die vorerwähnte Spreizbewegung der Zunge 21 beim Einstecken 59 des Schlüssels ist möglich, obwohl die Zunge 21 auf ihrer dem rastwirksamen Vorsprung 22 gegenüberliegenden Seite einen radialen Gegenvorsprung 23 aufweist. In diesem Bereich besitzt nämlich das Gehäuse 10 eine aus Fig. 1 erkennbare radiale Aussparung 16, in welche dieser Gegenvorsprung 23 beim Schlüsseleinstecken 29 radial ausweichen kann.

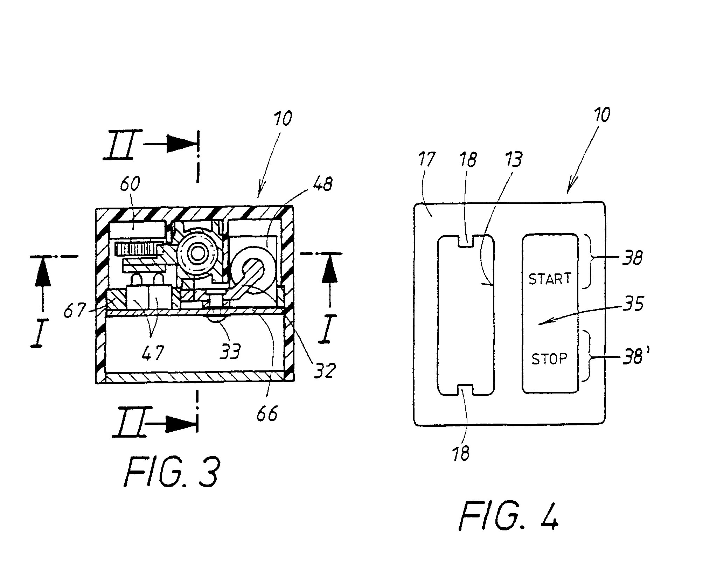

Ausweislich der Draufsicht von Fig. 4 ist die Öffnung 13 für die Aufnahme durch eine Blende 17 umgrenzt, die Führungsmittel 18 für den Schlüssel 50 besitzt. Diese bestehen hier aus zwei einander gegenüberliegend angeordneten Stegen 18 an der Blende 17. Die zugehörigen Führungsmittel 54 am Schlüssel bestehen, wie aus Fig. 1 und 2 hervorgeht, aus einer Längsnut. Diese beiseitigen Längsnuten 54 sorgen für ein gutes axiales Einstecken 59 des Schlüssels 50, auch wenn die Außenflächen des Schlüssels aus stilistischen Gründen nicht achsparallel ausgeführt sein sollten. Die vorerwähnte haltewirksame Rastvertiefung 55 ist im Übrigen im Bereich dieser Längsnut 54 angeordnet. Der in seine Anfangslage 50.1 von Fig. 5 befindliche Schlüssel 50 kann von Hand wieder im Sinne des Pfeils 57 von Fig. 5 manuell herausgezogen werden. Dann fährt die Abdeckung 14 wieder in ihre Ausschubstellung 40.1 von Fig. 1 zurück. Der Schlüssel kann auch in einer um 180 ° gewendeten Position eingesteckt werden.

Das Herausziehen 57 des Schlüssels ist aber verhindert, wenn der Schlüssel, ausgehend von seiner Anfangslage 50.1 von Fig. 5 um eine weitere, beträchtliche Hubstrecke 52 bis zu seiner in Fig. 6 erkennbaren zweiten axialen Hublage 50.2 überführt worden ist. Dann ist nämlich der Schlüssel 50 sogar formschlüssig in der Aufnahme 11 gesichert. An diesem Formschluss sind zunächst die gleichen Halteelemente 21, 22, 55 wie beim Rastgesperre beteiligt, das vorausgehend für den kraftschlüssigen Zusammenhalt zwischen dem Schieber 20 und dem Schlüssel 50 sorgte. Der an der federnden Zunge 21 vom Schieber 20 vorgesehene Gegenvorsprung 23 kommt in diese Hublage 50.2 an einer aus Fig. 6 erkennbaren radialen Stützfläche 19 im Gehäuse 10 zu liegen. Diese Stützfläche 19 befindet sich unterhalb der vorausgehend in der Anfangslage 50.1 damit ausgerichteten radialen Aussparung 16. In seiner Hublage 50.2 wird also der Schlüssel 50 in der Aufnahme 14 formschlüssig verriegelt. Ein Herausziehen 57 im Sinne des auch in Fig. 6 eingezeichneten Pfeils ist nicht möglich. Diese zweite Hublage 50.2 des Schlüssels soll nachfolgend kurz "Mittellage" bezeichnet werden.

Die axiale Position des Schiebers 20 von Fig. 5 oder 6 wird durch eine weitere Einsteckbewegungen 59 des Schlüssels 50 erreicht. In Fig. 5 befindet sich der Schieber 20 in einer dort mit 20.1 gekennzeichneten Ausgangsposition, welche die äußere Position des Schiebers im Gehäuse 10 ist. Diese Ausgangsposition 20.1 liegt im Übrigen auch in Fig. 1 bzw. Fig. 2 vor, wo der Schlüssel 50 ganz entfernt ist oder mit der Abdeckung 14 in Berührung 50.0 kommt. Die vorgenommene Hublage 50.2 des Schlüssels 50 ist zunächst gesichert, weil der den Schlüssel 50 aufnehmende Schieber 20 in der zugehörigen Axialposition 20.2 verriegelt wird. Dafür dient ein hier als federnde Klinke 30 ausgebildeter Riegel, der einen Sperrarm 31 und einen damit drehfesten Stellarm 32 aufweist. Der Riegel 30 ist bei 33 ortsfest im Gehäuse 10 schwenkbar gelagert und greift mit seinem Sperrarm 31 in den Betätigungsweg einer Schulter 24, die beim Axialbewegen des Schiebers 20 mitbewegt wird. Die Schulter 24 befindet sich hier an einem Nocken, der Bestandteil eines aus Fig. 5 erkennbaren Axialansatzes 25 des Schiebers 20 ist. Der Axialansatz 25 taucht beim Bewegen des Schiebers 20 entlang der Hubstrecke 52 teleskopartig in eine gehäusefeste Hülse 45 ein.

Die Gehäusehülse 45 und der Axialansatz 25 dienen im Übrigen auch zur Aufnahme einer kräftigen Rückstellfeder 40, die bestrebt ist, den Schieber 20 in dessen Ausgangsposition 20.1 zu halten. Dazu ist zweckmäßigerweise auch der Axialansatz 25 vom Schieber 20 rohrförmig ausgebildet und besitzt einen Innenbund 26 an dem sich das obere Ende der Rückstellfeder 40 abstützt. Der obere Bereich dieses rohrförmigen Axialansatzes 25 kann seinerseits als Aufnahme für die bereits oben beschriebene Abdeck-Druckfeder 15 dienen, die demgegenüber sehr viel weicher ausgebildet ist. Die Rückstellfeder 40 übt auf den Schieber 20 eine durch den Pfeil 41 in Fig. 5 verdeutlichte Rückstellkraft aus. Dadurch wird der Schieber 20 gegen einen gehäusefesten Endanschlag 42 gedrückt, der hier durch die Innenfläche der beschriebenen Blende 17 gebildet wird. Dieser Anschlag 42 bestimmt die Ausgangsposition 20.1 des Schiebers 20. Der Nocken mit der Schulter 24 befindet sich in der Ausgangsposition 20.1 des Schiebers 20 noch axial oberhalb der Klinke 30.

Die Schulter 24 wirkt mit der Klinke 30 nach Art eines sogenannten "Richtgesperres" zusammen. Der Sperrarm 31 befindet sich mit seinem Sperrende in dem durch eine Punktlinie 27 in Fig. 5 veranschaulichten Verschiebungsweg 27 der Schulter 24. Bei der Einsteckbewegung 59 von Fig. 5 fährt der die Schulter 24 tragende Nocken gegen den Sperrarm 31 der Klinke 30 und drückt diese weg, bis die Schulter 24 in ihrer aus Fig. 6 ersichtliche Position gekommen ist. Dann schnappt der Sperrarm 31 vor die Schulter 24 und hält den Schieber 20, gegen die axiale Federbelastung 41 in der Axialposition 20.2 fest. Eine Rückbewegung des Schiebers 20 in die vorausgehende Axialposition 20.1 ist zunächst nicht möglich.

Die der Mittellage 50.2 des Schlüssels 50 von Fig. 6 entsprechende Axialposition 20.2 des Schiebers 20 soll als "Arbeitsposition" bezeichnet werden. In dieser Mittellage 50.2 erkennt zunächst eine elektronische Steuereinheit der Vorrichtung z.B. auf elektrischem oder elektromagnetischem Weg, dass es sich um den richtigen Schlüssel 50 handelt. Als Identifikationsmittel dient im vorliegenden Fall ein im Gehäuse 10 integrierter Transponder 43, der Bestandteil der nicht näher gezeigten elektrischen Steuereinheit ist. Wenn die Übereinstimmung des Schlüssels 50 mit der Vorrichtung festgestellt ist, schaltet die Steuereinheit ihre elektrischen Ausgänge und/oder Eingänge wirksam. Eine bis dahin bestehende eventuelle Sperre der Fahrzeuglenkung wird entriegelt. Vor allem werden Sensoren 44 wirksam gesetzt, die zu einem hier manuell bedienbaren Betätiger 35 gehören. Mit diesen Sensoren 44 werden die gewünschten verschiedenen Funktionen im Fahrzeug ausgewählt.

Der Betätiger 35 besteht im vorliegenden Fall aus einem Taster, der, wie am besten aus Fig. 2 und 8 zu erkennen ist, in einem Nachbarbereich des gleichen Gehäuses 10 integriert sein kann. Der Taster 35 ist aufgrund einer Axialführung 34 im Sinne des Druckpfeils 36 von Fig. 8 axial betätigbar und wird mittels einer Rückstellfeder 37 und entsprechende Endanschläge in seine Ausgangsstellung von Fig. 2 zurückgeführt. Welche Betätigungen zu welchen Funktionen im Fahrzeug führen, hängt von der Programmierung der elektrischen Steuereinheit ab. Eine Möglichkeit besteht darin, dass beim ersten Drücken 38 des Tasters 35 ein Radio sowie eine Elektronik im Fahrzeug eingeschaltet wird, z.B. das Parklicht, der Antrieb für Fensterheber, die motorische Sitzverstellung und das Schiebedach. An der Funktionssteuerung der Elektronik können auch noch andere, an sich übliche Steuerglieder im Fahrzeug beteiligt sein, z.B. die Fußbremse. Die vorerwähnte Radioeinstellung erfolgt in diesem Fall ohne Betätigung der Fußbremse. Die weiteren Funktionen im Fahrzeug können auf folgende Weise ausgelöst werden.

Durch ein zweites Drücken 36 des Tasters 35, ohne gleichzeitige Betätigung der Fußbremse, erfolgt beispielsweise die Zündung des Motors. Wird der Taster 35 gedrückt 36 und gleichzeitig die Fußbremse getreten, dann startet der Motor. Wird daraufhin der Taster 35 nochmals gedrückt 36, so geht der Motor wieder aus. Letzteres kann dann mit oder ohne Betätigung der Fußbremse erfolgen.

Diese Funktionen können auch optisch im Bereich des Tasters 35 angezeigt werden, wie am besten anhand von Fig. 8 zu entnehmen ist. Über die Steuerelektronik wird bei der Funktion "Start" eine erste Diode 46 angesteuert, die ein Teil-Schriftfeld 38 des Tasters 35 gemäß Fig. 4 beleuchtet. Lichttrennwände 39 sorgen für eine entsprechende Teilbelichtung auf der Schauseite des Tasters 35. Bei der Funktion "Stop" wird durch die Steuereinheit dagegen eine zweite Diode 46' bestromt, worauf dann im Nachbar-Schriftfeld 38' die Beleuchtung eingeschaltet wird und die schauseitige Beschriftung im Taster 35 ablesbar macht.

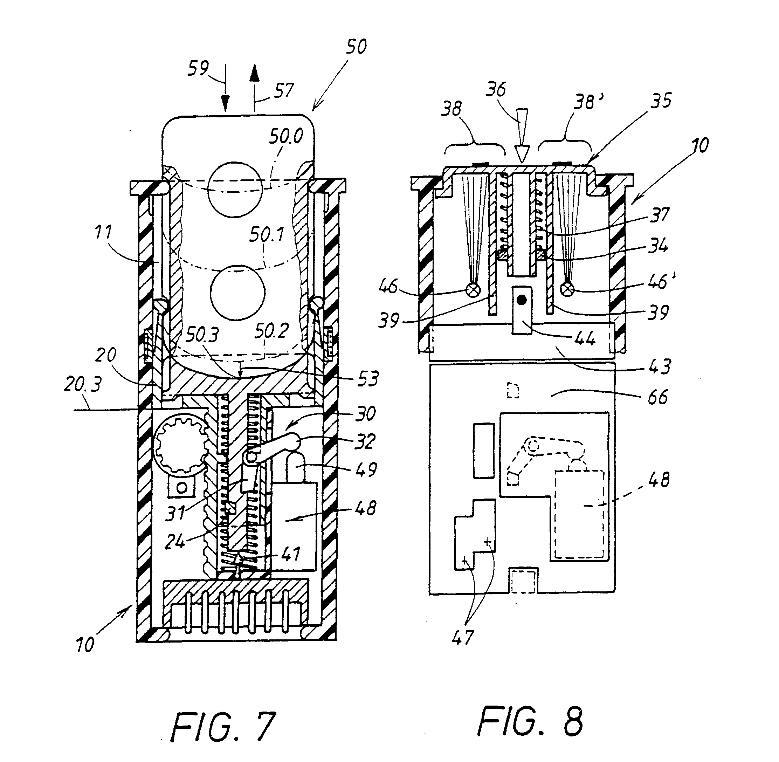

Die Verriegelung des Schlüssels 50 in der Mittellage 50.2 erfolgt, wie oben beschrieben wurde, durch den Sperrarm 31 der Klinke 30, der über die Schulter 24 auch den Schieber 20 in dessen entsprechende Arbeitsposition 20.2 festhält. Die Klinke 30 befindet sich aufgrund ihrer nicht näher gezeigten Drehfederbelastung und entsprechender Drehanschläge normalerweise in ihrer Sperrposition von Fig. 6. Der Schlüssel 50 ist dabei größtenteils in der Aufnahme 11 versenkt angeordnet und ragt nur mit einem minimalen Endstück 56 aus der Aufnahme 11 gemäß Fig. 6 heraus. Um den Schlüssel 50 aus der Mittellage 50.2 lösen zu können, muss der Schlüssel 50 zunächst in eine noch tiefere Hublage 50.3 gemäß Fig. 7 im Sinne des dortigen Einsteckpfeils 59 eingedrückt werden. Diese Hublage 50.3 kurz "Endlage" bezeichnet werden. In Fig. 7 sind die vorausgehenden Hublagen 50.0 bis 50.2 ebenfalls strichpunktiert eingezeichnet.

Zum Übergang von Fig. 6 auf Fig. 7 wird der Schlüssel 50 nur noch um eine verhältnismäßig kleine dritte Hubstrecke 53 gemäß Fig. 7 gegen die axiale Federkraft 41 eingedrückt. Der Schlüssel erreicht dann seine unterste dritte Hublage 50.3. welche natürlich wieder einer entsprechenden Endposition 20.3 des Schiebers 20 entspricht. Diese Endposition 20.3 wird von weiteren Sensoren 47 erfasst, die zu der erfindungsgemäßen Steuereinheit gehören. Im Ansprechfall schaltet die Steuereinheit einen Antrieb 48 ein, der hier aus einem elektrischen Hubmagneten besteht. Dieser Hubmagnet 48 bewegt einen Stößel 49 od. dgl. in eine Arbeitsposition, in welcher er den vorerwähnten Stellarm 32 der Klinke 30 trifft. Weil der Stellarm 32 drehfest mit dem Sperrarm 31 ist, wird durch diese Schwenkbewegung gemäß Fig. 7 der Sperrarm 31 aus seiner bisherigen Sperrposition wegbewegt. Die Schulter 24 wird freigegeben. Die Blockade des Schiebers 20 ist dann aufgehoben. Der Schieber 20 wird aufgrund der wirkenden Federkraft 41 im Sinne des Bewegungspfeils 57 von Fig. 7 automatisch zurückbewegt. Der Sperrarm 31 bleibt dabei solange durch den Hubmagneten 48 in seiner entriegelten Position von Fig. 7, bis die mit dem Schieber 20 mitbewegliche Schulter 24 sich an seinem Sperrende vorbeibewegt hat; d.h. bis kurz nach der aus Fig. 6 erkennbaren Mittellage 50.2 des Schlüssels.

Nach der Entriegelung von Fig. 7 bewegt die axiale Federkraft 41 den Schieber 20. und mit ihm den Schlüssel 50 bis sich wieder die Verhältnisse von Fig. 5 ergeben. Der Schieber 20 stoppt erst in seiner dortigen Ausgangsposition 20.1, wo die Federkraft 41 von dem erwähnten Endanschlag 42 für den Schieber 20 aufgenommen wird. Der Schlüssel 50 steckt aber immer noch in seiner Aufnahme 11. Jetzt ragt der Schlüssel 50 allerdings mit einem größeren Teilstück 28 aus der Aufnahme 11 heraus. Er kann mit der Hand bequem erfasst und manuell ganz im Sinne des Pfeils 57 herausgezogen werden. In der Anfangslage 50.1 von Fig. 5 liegt nämlich wieder die beschriebene kraftschlüssige Halterung des Schlüssels 50 im Schieber 20 vor.

Durch eine plötzliche Rückstellbewegung des Schiebers 20 aus der Endposition von Fig. 2.3 in die Ausgangsposition 20.1 von Fig. 5 könnte der Schlüssel 50 Beschleunigungskräften ausgesetzt sein, die ihn aus der Aufnahme 11 heraus katapultieren, über seine kraftschlüssige Anfangslage 50.1 in Fig. 5 hinaus. Dies lässt sich leicht durch eine geeignete Dämpfungseinrichtung 60 beheben. Diese besteht im vorliegenden Fall aus einem Dämpfungsrad 60, das ortsfest im Gehäuse 10 bei 61 drehgelagert ist, wie aus Fig. 1 und 2 zu erkennen ist. Das Dämpfungsrad 60 steht über ein Stirnrad 62 in Zahneingriff mit einer Zahnstange 63, die mit dem Schieber 20 mitbeweglich ist. Die Zahnstange 63 kann in den vorerwähnten Axialansatz 25 gemäß Fig. 1 und 2 integriert sein, wo auch der Nocken für die Schulter 24 sitzt. Sofern als Sensor 47 ein Mikroschalter verwendet wird, kann der entsprechende Schaltnocken 64 an diesem Ansatz 25 sitzen.

Die erwähnte Steuereinheit ist über die am unteren Gehäuseende vorgesehenen Steckkontakte 65 mit den elektrischen Bauteilen im Inneren des Gehäuses 10 verbunden. Man kann dazu eine auch aus Fig. 8 erkennbare Leiterplatte 66 nutzen, die durch geeignete Zwischenböden 67 in ihrer Position im Inneren des Gehäuses gemäß Fig. 3 gehalten wird.

Wie erwähnt wurde, wird der Schlüssel 50 aus seinem Formschluss in Fig. 6 über Fig. 7 auf elektromechanische Weise freigegeben und selbsttätig in seine Anfangslage 50.1 von Fig. 5 zurückgeführt. Die Bedingung hierfür, welche die erwahnte elektrische Steuereinheit überwacht, ist, dass der Motor des Fahrzeugs ausgeschaltet ist. Wenn man, bei eingeschaltetem Motor, in der Mittellage 50.2 den Schlüssel 50 eindrückt, so wird der beschriebene Hubmagnet 48 nicht wirksam gesetzt; die Klinke 30 bleibt sperrwirksam und fängt den Schlüssel wieder in der Mittellage 50.2 von Fig. 6. Damit ist eine Fehlbedienung der erfindungsgemäßen Vorrichtung ausgeschlossen.

Eine Alternative kann aber darin bestehen, dass bei stehendem Fahrzeug, wo die Räder sich nicht mehr drehen, der Motor noch an ist. Auch dies wird von der elektrischen Steuereinheit registriert. Wird dann wieder im Sinne von Fig. 7 auf den Schlüssel 50 gedrückt, so kann über einen Impulsschalter der Motor ausgeschaltet werden. Der beschriebene Formschluss des Schlüssels 50 wird dann wieder elektromechanisch freigegeben und kann über die Kraftschlussraste aus einer Anfangslage 50.1 in Fig. 5 manuell entnommen werden.

Wie bereits erwähnt wurde, zeigen die Fig. 9 bis 14 den Aufbau und die Wirkungsweise eines zweiten Ausführungsbeispiels der erfindungsgemäßen Vorrichtung, welcher eine eigenständige erfinderische Bedeutung zukommt. Zur Benennung analoger Bauteile sind die gleichen Bezugszeichen wie im ersten Ausführungsbeispiel verwendet, weshalb insoweit die bisherige Beschreibung gilt. Es genügt lediglich auf die Unterschiede einzugehen. Bei dieser Vorrichtung besitzt der Schlüssel 50 die Form einer Scheckkarte.

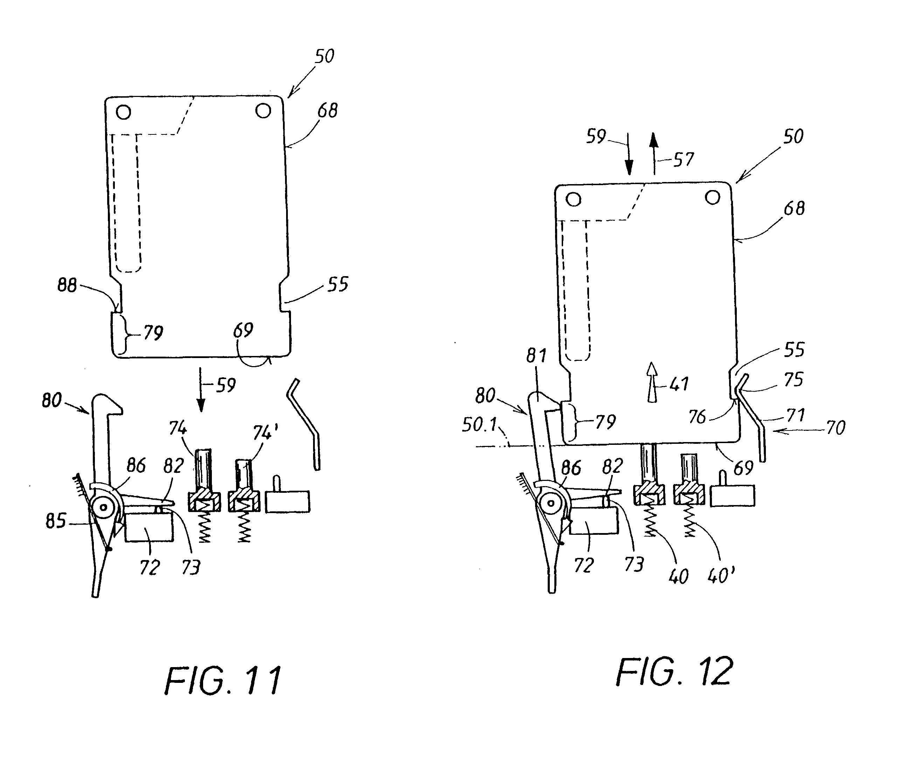

Die stirnseitige Öffnung 13 der dortigen Aufnahme 11 besteht aus einem Schlitz im Gehäuse 10. Die Abdeckung 14' der Öffnung 13 erfolgt hier durch eine Klappe, deren Aufklapplage in Fig. 10 ausgezogen und deren Zuklapplage bei entnommenem Schlüssel in Fig. 10 strichpunktiert angedeutet ist. Identifikationsmittel für den Schlüssel 50 sind im Gehäuse 10 integriert und bestehen auch in diesem Fall z.B. aus einem Transponder 43. Einen Schieber 20, wie im ersten Ausführungsbeispiel, gibt es nicht. Die Haltemittel und Verriegelungen wirken unmittelbar mit dem Schlüssel 50 zusammen, dessen am besten aus Fig. 11 erkennbarer Scheckkartenumriss 68 in geeigneter Weise profiliert ist. Auch in diesem Fall kann der Schlüssel 50 in der Aufnahme 11 in drei axiale Hublagen 50.1, 50.2 und 50.3 überführt und positioniert werden. Diese drei Hublagen sind in Fig. 9 durch Höhenlinien veranschaulicht und in Fig. 12 bis 14 zusammen mit den damit zusammenwirkenden Bauteile verdeutlicht.

Beim Einschieben 59 des Schlüssels 50 wird zunächst die in Fig. 12 gezeigte Anfangslage 50.1 des Schlüssels 50 erreicht, wo der Schlüssel 50 durch ein Rastgesperre 70 kraftschlüssig im Gehäuse 10 gesichert ist. Auch in diesem Fall besteht das Halteelement 71 aus einer radial federnden Zunge, doch ist diese, im Gegensatz zum ersten Ausführungsbeispiel, ortsfest im Gehäuseinneren positioniert. Zum Rastgesperre 70 gehört eine Rastvertiefung 55 im Schlüssel 50, die durch ein entsprechendes Kantenprofil seines erwähnten Kantenumrisses 68 erzeugt ist. Ein radialer Vorsprung 75 an der Zunge 71 untergreift kraftschlüssig eine Haltekante 76 an der Rastvertiefung 55.

Weil es in diesem Fall, wie gesagt, einen Schieber nicht gibt, wirken in Fig. 9 angedeutete Rückstellkräfte 41 unmittelbar auf den Schlüssel 50 ein. Maßgeblich dafür sind hier doppelt vorgesehene Rückstellfedern 40, 40', die über einen zugehörigen Stößel 74 bzw. 74', welcher auf die Unterkante 69 des Schlusselumrisses 68 drücken können. In Fig. 12 ist gerade der eine Stößel 74 in Kantenberührung und übt eine nur geringe Rückstellkraft 41 aus. Die kraftschlüssige Haltekraft der federnden Zunge 41 reicht jedenfalls aus, um die Anfangslage 50.1 des Schlüssels 50 von Fig. 12 sicherzustellen. Eine Entnahme 57 des Schlüssels ist gegen die Wirkung des Rastgesperres 70 in Fig. 12 möglich.

Auch bei diesem zweiten Ausführungsbeispiel lässt sich der Schlüssel 50 von der Anfangslage 50.1 um eine Hubstrecke 52 in die aus Fig. 13 ersichtliche zweite Mittellage 50.2 in der Aufnahme 11 der Vorrichtung weiterschieben 59. Auch in diesem Fall kommt es in der Mittellage 50.2 zu einem Formschluss. Die hierfür maßgeblichen Halteelemente 81 sind in diesem Fall, im Gegensatz zum ersten Ausführungsbeispiel, nicht Bestandteil des Rastgesperres 70, sondern gehören zu einem davon gesonderten Gesperre 80, welches eine mehrfache Funktion zu erfüllen hat. Dieses Gesperre besteht im vorliegenden Fall aus einer Klinke 80, die an einem ortsfesten Lager 84 im Gehäuse 10 schwenkgelagert ist. Eine Klinken-Federbelastung 85 ist bestrebt die Klinke 80 in ihrer aus Fig. 11 ersichtlichen Lage zu halten, wo sie mit einem Stellarm 82 auf den Betätiger 73 eines hier als Mikroschalter ausgebildeten Sensors 72 einwirkt. Dies liegt bereits bei entnommenen Schlüssel gemaß Fig. 11 vor. Dieser Stellarm 82 ist drehfest mit dem vorbeschriebenen Halteelement 81 dieses Verriegelungsgesperres 80 verbunden.

In der in Fig. 12 beschriebenen Ausgangslage 50.1 des eingesteckten Schlüssels 50 kommt das Halteelement 81 der Klinke 80 mit dem Profilbereich 79 der Umrisskontur 68 in Berührung, durch welche die Klinke 80 gegen ihre Rückschwenkkraft 86 zurückgeschwenkt wird. Dadurch wird der Betätiger 73 des Klinken-Sensors 72 vom Stellarm 82 freigegeben. Das wird von einer auch bei dieser Vorrichtung vorgesehenen elektrischen Steuereinheit festgestellt, an die dieser Klinken-Sensor 72 angeschlossen ist. Der vorerwähnte Transponder 43 wird wirksam gesetzt und stellt fest, ob der "richtige Schlüssel" eingestellt ist. Nur beim richtigen Schlüssel werden bereits erste Funktionen im Fahrzeug von der Steuereinheit eingeschaltet. z.B. die Spannungsversorgung für ein Radio, für das Parklicht, für einen Antrieb eines Fensterhebers, einer motorischen Sitzverstellung und eines Schiebedachs.

Beim Weiterdrücken 52 des Schlüssels 50 in die bereits erwähnte Mittellage 50.2 von Fig. 13 kommt der Formschluss dadurch zustande, dass das Halteelement 81 ein Hakenende 87 aufweist, welches eine Schulter 88 vom Schlüssel 50 hintergreift. Jetzt ist eine Entnahme des Schlüssels im Sinne des Pfeils 57 blockiert. Bei der Verschiebung 52 des Schlüssels 50 von Fig. 12 auf Fig. 13 ist auch eine Hubarbeit gegen die von der Rückstellfeder 40 bedingte Rückstellkraft 41 ausgeübt worden. In Fig. 13 kommt aber auch die andere Rückstellfeder 40' mit ihrem Stößel 74' an der Unterkante 69 des Schlüsselprofils 68 zur Anlage. Die Schulter 88 gehört zu einem Randausbruch 89 im Scheckkartenumriss 68. Aufgrund seiner Rückschwenkkraft 86 ist daher die Klinke 80 wieder in ihrer bereits in Fig. 11 beschriebenen Ausgangs-Schwenkstellung, wo ihr Stellarm 82 den Betätiger 73 des Klinken-Sensors 72 drückt. In dieser Mittellage 50.2 des Schlüssels schaltet die zugehörige elektrische Steuereinheit die Zündung des Motors im Fahrzeug ein.

In der Mittellage 50.2 von Fig. 13 kommt es auf die kraftschlüssige Haltewirkung des Rastgesperres 70 nicht mehr an. Ein an der federnden Zunge 71 befindlicher radialer Vorsprung 75 greift zwar immer noch in die erwähnte Rastvertiefung 55 des Schlüssels 50 ein, doch liegt dieser Vorsprung 75, im Gegensatz zu Fig. 12, in Abstand von der für den Kraftschluss von Fig. 12 sorgenden Haltekante 76.

Ausgehend von Fig. 13 kann der Schlüssel 50 um eine weitere Hubstrecke 53 in die aus Fig. 14 ersichtliche Endlage 50.3 überführt werden. Dazu ist eine höhere Kraft erforderlich, weil dem Einschieben 59 nicht nur die bisherige Rückstellfeder 40, sondern auch die zweite Rückstellfeder 40' entgegenwirken. Die Endlage 50.3 wird von einem weiteren Sensor 77 festgestellt. Dieser besteht im vorliegenden Fall ebenfalls aus einem Mikroschalter, dessen Betätiger 78 von der Unterkante 69 des Schlüsselprofils gedrückt wird. Auch dieser Schlüssel-Sensor 77 ist natürlich mit der elektrischen Steuereinheit verbunden. Gleichzeitig stellt die Steuereinheit in Fig. 14 den gedrückten Zustand des Klinken-Sensors 72 fest. Aufgrund ihrer Programmierung schaltet die Steuereinheit den Anlasser des Motors an. Der Motor startet. Dies kann zeitgesteuert erfolgen. Als weitere Bedingung kann die elektrische Steuerung das pedale Betätigen einer Fußbremse überwachen. Auf diese Weise kann ein versehentlicher Start des Motors verhindert werden, wenn die Fußbremse nicht getreten wird. Darüber hinaus wird aber im vorliegenden Fall die Endlage 50.3 des Schlüssels nur impulsweise erreicht, wie aus folgendem Umstand in Fig. 14 zu ersehen ist.

Der vorbeschriebene Halterarm 81 der Klinke 80 kann mit seinem Hakenende 87 sich in dem entsprechend breit bemessenen Randausbruch 89 des Schlüssels von seiner die Verriegelung bedingenden Schulter 88 axial entfernen. Trotz des Eingriffs der Klinke 80 in den Randausbruch 89 erweist sich diese Verriegelung 80 von Fig. 13 als ein "Richtgesperre", welches zwar das Herausziehen 57 des Schlüssels 50 aus der Mittellage 50.2 von Fig. 13 verhindert, aber ein tieferes Einschieben 59 des Schlüssels in die Endlage 50.3 gestattet. Es handelt sich um eine ähnliche Wirkung, die beim ersten Ausführungsbeispiel von gesonderten Mitteln 30, 31, 24 besorgt werden musste. In diesem zweiten Ausführungsbeispiel übernehmen die Haltemittel 81, 88, 89 der formschlüssigen Verriegelung 80 zugleich die Funktion dieses "Richtgesperres".

Der vorbeschriebene weitere Abwärtshub 53 des Schlüssels wird auch nicht von den Elementen des kraftschlüssigen Rastgesperres 70 behindert. Wie Fig. 14 zeigt, erlaubt die Größe der Rastaussparung 55 eine entsprechend ungestörte Verschiebung des radialen Vorsprungs 75 an der zugehörigen federnden Zunge 71. Der Freiraum bei 89 im Bereich der Klinke 80 einerseits und bei 55 im Bereich des Rastgesperres 70 andererseits erlauben es, dass die von den Rückstellfedern 40, 40' ausgeübte Rückstellkraft 41 den Schlüssel 50 aus Fig. 14 wieder in die Mittellage 50.2 von Fig. 13 zurückführt. Die Mittellage 50.2 ist ja durch das wie ein "Sperrarm" wirkende Halteelement 81 der Klinke 80 gesichert; das Hakenende 87 hintergreift wieder die Schulter 88 vom Schlüssel 50. Es liegt dann wieder die im Zusammenhang mit Fig. 13 bereits beschriebene Stellung "Zündung" des Motors vor. Der vorausgehend in Fig. 14 gestartete Motor läuft in Fig. 13 weiter.

Um den Motor auszuschalten, braucht, ausgehend von der Mittellage 15.2 des Schlüssels 50 in Fig. 13 der Schlüssel 50 nur noch erneut, ein zweites Mal, in seine Endlage von Fig. 14 gedrückt zu werden. Es kommt dabei nicht darauf an, ob die Fußbremse dabei ebenfalls getreten oder nicht getreten wird. Stattdessen kann die elektrische Steuerung über einen Sensor den Bremskonkakt oder die Raddrehung vom Fahrzeug sensieren. Die elektrische Steuereinheit schaltet aber auch einen auf die Klinke 80 wirkenden Antrieb 48 gemäß Fig. 9 ein. Dieser besteht auch in diesem zweiten Ausführungsbeispiel aus einem Hubmagneten 48, der über einen Stößel 49 auf einen drehfest mit der Klinke 80 verbundenen Lösearm 83 einwirkt. Die Klinke 80 wird in die strichpunktiert in Fig. 9 verdeutlichte Entriegelungsstellung 80' überführt. Dann ist die Schulter 88 frei. Weil die Rückstellfeder 40 eine Rückstellkraft 41 ausübt, schiebt sie den Schlüssel 50 aus der Mittellage 50.2 von Fig. 13 bzw. 9 wieder in die Anfangslage 50.1 von Fig. 12 zurück. Dann ist der Formschluss beseitigt. Das Verriegelungsgesperre 80 ist gemäß Fig. 12 durch den beschriebenen Profilbereich 79 entriegelt. Es liegt wieder nur der Kraftschluss des Rastgesperres 70 vor. Die manuelle Entnahme 57 des Schlüssels 50 ist in Fig. 12 wieder ohne weiteres möglich. Beim Klinken-Sensor 72 befindet sich der Betätiger 73 wieder im umgedrückten Zustand.

Ausgehend von der Anfangslage 50.1 des Schlüssels 50 in Fig. 12 kann der Schlüssel 50 natürlich alternativ, durch erneutes zweistufiges Drücken 59, über die Mittellage 50.2 von Fig. 13, wo sich die Zündung von der Steuereinheit wieder einschaltet, die Endlage 50.3 gemäß Fig. 14 gebracht werden, wo der Motor gestartet wird. Eine Fehlbedienung ist ausgeschlossen.

Auch in diesem zweiten Ausführungsbeispiel kann der mit der Klinke 80 zusammenwirkende Hubmagnet 48 dazu genutzt werden, um einen "falschen Schlüssel" aus der Vorrichtung zu entfernen. Es könnten zunächst die Haltelage 50.1 von Fig. 12 und möglicherweise auch die Endlage 50.2 von Fig. 13 mit einem falschen Schlüssel erreicht sein. Spätestens dann identifiziert aber der Transponder 43 od. dgl. den "falschen Schlüssel". Daraufhin schaltet die elektrische Steuereinheit den Hubmagneten 48 ein, der über seinen Stößel 49 die Klinke 80 in ihre beschriebene Entriegelungsstellung 80' überführt. Die von den Rückstellfedern 40 ausgeübte Rückstellkraft 41 drückt dann den falschen Schlüssel in die Anfangslage 50.1 von Fig. 12 zurück. Der Motor konnte mit dem falschen Schlüssel nicht gestartet werden.

Sofern das Fahrzeug mit einem "Automatikgetriebe" versehen ist, muss bei der Schlüsselentnahme 57 in der Anfangsstellung 50.1 von Fig. 12 der Wahlhebel auf den Stellungen "B" oder "N" stehen. Außerdem ist bei dieser Vorrichtung ebenso wie beim ersten Ausführungsbeispiel eine elektrische Lenkradverriegelung vorgesehen, die bei entnommenen Schlüssel für eine Verriegelung des Lenkrads sorgt. Befindet sich der richtige Schlüssel in der Aufnahme 11, der dann vom Transponder 43 festgestellt wird, so wird die Lenkradverriegelung unwirksam gesetzt. Außerdem ist ein nicht näher gezeigter Sensor im Bereich der Aufnahme 11 vorgesehen, welcher in beiden Ausführungsbeispielen eine Verriegelung des Lenkrads dann ausschließt, solange der Schlüssel 50 sich in einen seiner drei Hublagen 50.1, 50.2 oder 50.3 befindet. Erst wenn der Schlüssel 57 aus dem Gehäuse 10 ganz entnommen ist, wird die Lenkradverriegelung wirksam gesetzt. Ebenso wird in allen Fahrtstellungen eines Automatik-Getriebes eine Auswurfbewegung auf den in der Mittellage 50.2 befindlichen Schlüssel 50 der Schlüssel nicht freigegeben und die Lenkradsicherung nicht in ihre Verriegelungsposition überführt. So lassen sich leicht Fehlbedienungen verhindern.

Im Gehäuse kann eine aus Fig. 9 und 10 ersichtliche Beleuchtung 90 vorgesehen sein, die beim Öffnen der Tür für eine bestimmte Zeit aktiviert wird. Dann wird der Einführschlitz 13 beleuchtet und erleichtert das Einführen der Karte 50.

### Bezugszeichenliste

- 10: Gehäuse
- 11: Aufnahme
- 12: Kontur der Armatur
- 13: stirnseitige Öffnung von 11
- 14: Abdeckung von 11
- 14': Abdeckklappe (Fig. 10)
- 14.1: Ausschubstellung von 14 (Fig. 1, 2)
- 14.2: Einschubstellung von 14 (Fig. 6 bis 7)
- 15: Abdeck-Druckfeder für 14
- 16: radiale Aussparung von 10 für 23
- 17: Blende für 13
- 18: axiales Führungsmittel bei 17, Steg
- 19: radiale Stützfläche für 23 von 10
- 20: Schieber
- 20.1: erste Axialposition von 20, Ausgangsposition (Fig. 1 bis 5)
- 20.2: zweite Axialposition von 20, Arbeitsposition (Fig. 6)
- 20.3: dritte Axialposition von 20, Endposition (Fig. 7)
- 21: Halteelement für 50, federnde Zunge
- 22: erster Endanschlag für 14, Halteelement für 50, federnder Vorsprung
- 23: Gegenvorsprung an 21
- 24: Schulter für 31, Nocken (Richtgesperre)
- 25: Axialansatz von 20
- 26: Innenbund in 25 für 40
- 27: Punktlinie, Verschiebungsweg von 24
- 28: herausragendes Teilstück von 50 (Fig. 5)
- 29: zweiter Endanschlag von 14 (Fig. 5)
- 30: Riegel, Klinke (Richtgesperre)
- 31: Sperrarm von 30 (Richtgesperre)
- 32: Lösearm von 30
- 33: Schwenklager von 30
- 34: Axialführung für 35 (Fig. 8)
- 35: Betätiger, Taster
- 36: Druckbetätigungspfeil zur Tasterbetätigung für 35 (Fig. 8)
- 37: Rückstellfeder für 35
- 38: Schriftfeld-Teil von 35 für 46
- 38': Schriftfeld-Rest von 35 für 46'
- 39: Lichttrennwand an 35 (Fig. 8)
- 40: Rückstellfeder für 20 (Fig. 1 bis 8) bzw. für 50 (Fig. 9 bis 14)
- 40': weitere Rückfestellfeder für 50 (Fig. 9 bis 14)
- 41: Pfeil der axialen Rückstellkraft von 20 bzw. 50, axiale Federbelastung
- 42: Endanschlag an 10 für 20 (Fig. 5)
- 43: Transponder der elektronischen Steuereinheit
- 44: Sensor für 35 (Fig. 2, 8)
- 45: Gehäusehülse für 25
- 46: Diode für "Start" in 35 (Fig. 8)
- 46': Diode für "Stop" in 35 (Fig. 8)
- 47: Sensor für 50.3
- 48: Antrieb, Hubmagnet
- 49: Stößel von 48
- 50: elektronischer Schlüssel
- 50.0: Berührungslage von 50 (Fig. 1, 2)
- 50.1: erste axiale Hublage von 50, Anfangslage (Fig. 5)
- 50.2: zweite axiale Hublage von 50, Mittellage (Fig. 6)
- 50.3: dritte axiale Hublage von 50, Endlage (Fig. 7)
- 51: erste Hubstrecke von 50 (Fig. 5)
- 52: zweite Hubstrecke von 50 (Fig. 6)
- 53: dritte Hubstrecke von 50 (Fig. 7)
- 54: axiales Führungsmittel an 50, Längsnut
- 55: Halteelement, Rastvertiefung
- 56: herausragendes Endstück von 50 bei 50.2 (Fig. 6)
- 57: Pfeil des Rückschubs, Herausziehbewegung von 50 aus 11
- 58: Vorderstück von 50
- 59: Pfeil der Einschubbewegung von 50 in 11
- 60: Dämpfungseinrichtung für 20, Dämpfungsrad
- 61: Drehachse von 60
- 62: Stirnrad von 60
- 63: Zahnstange für 62
- 64: Schaltnocken für 47 (Fig. 2)
- 65: Steckkontakt an 10
- 66: Leiterplatte
- 67: Zwischenboden (Fig. 3)
- 68: Kartenumriss von 50 (Fig. 11), Schlüsselprofil
- 69: Unterkante von 50
- 70: kraftschlüssiges Rastgesperre
- 71: Halteelement von 70, federnde Zunge
- 72: Klinken-Sensor
- 73: Betätiger von 72
- 74: Stößel für 40
- 74': Stößel für 40'
- 75: federnder Vorsprung an 71
- 76: Haltekante von 55 für 50 (Fig. 12)
- 77: Schlüssel-Sensor
- 78: Betätiger von 77
- 79: Profilbereich von 68 für Abstützung von 81
- 80: Richtgesperre, Klinke (Verriegelungsstellung)
- 80': Entriegelungsstellung von 80
- 81: Halteelement von 80, Sperrarm
- 82: Stellarm von 80
- 83: Lösearm von 80
- 84: Schwenklager für 80
- 85: Klinken-Federbelastung
- 86: Rückschwenk-Kraft von 85 auf 80
- 87: Hakenende von 81
- 88: Schulter für 87 von 80
- 89: Randausbruch von 68 für 87
- 90: Beleuchtung in 11 (Fig. 10)

## Patentansprüche

1. Vorrichtung zum Starten eines Fahrzeug-Motors mittels eines elektronischen Schlüssels (50), der gegebenenfalls ein Scheckkarten-Format aufweist,
mit einer zum Einstecken (59) des Schlüssels (50) dienenden Aufnahme (11) im Fahrzeug,
wobei der in der Aufnahme (11) eingesteckte Schlüssel (50) unverdrehbar und mindestens zwischen drei zueinander axial versetzten Hublagen (50.1, 50.2, 50.3) längsverschiebbar (51, 52, 53) ist
wobei der Schlüssel (50) in seiner Endlage (50.3) in Richtung seiner Anfangslage (50.1) entweder unmittelbar oder mittelbar von einer Rückstellfeder (40) axial federbelastet (41) ist und
einige der drei Schlüssel-Hublagen (50.1, 50.2, 50.3) von Sensoren einer Steuereinheit überwacht und zur Steuerung von verschiedenen Funktionen des Motors genutzt werden,
**dadurch gekennzeichnet,**
**dass** der Schlüssel (50) auch in seiner Mittellage (50.2) in Richtung seiner Anfangslage (50.1) von einer Rückstellfeder (40) axial federbelastet (41) ist und
beim Einschieben (59) des Schlüssels (50) in die Anfangslage (50.1) ein Rastgesperre (21, 22; 50; 70) und beim Einschieben (59) in die Mittellage (50.2) ein mit dem Schlüssel (50) mittelbar (20) oder unmittelbar zusammenwirkendes Richtgesperre (24; 30, 31; 80) selbsttätig wirksam setzbar sind und
**dass** die Steuereinheit auf ein einmaliges oder mehrmaliges Eindrücken (59) des Schlüssels (50) zwischen der Mittellage (50.2) in die Endlage (50.3) anspricht und das Richtgesperre (24; 30, 31; 80) solange unwirksam setzt, bis die Rückstellfederkraft (41) den Schlüssel (50) selbsttätig in die Anfangslage (50.1) zurückgeschoben (57) hat.

2. Vorrichtung nach Anspruch 1, **dadurch gekennzeichnet,**
**dass** das Richtgesperre einen seinerseits federbelasteten (85) Riegel (30; 80) aufweist, der in den axialen Weg (27) einer entweder unmittelbar oder mittelbar (20) mit dem Schlüssel (50) mitverschieblichen Schulter (24; 88) hineinragt und die Schulter (24; 88) in der Endlage (50.3) des Schlüssels (50) hintergreift
und **dass** die Steuereinheit im Ansteuerungsfall den Riegel (30; 80) gegen seine Riegel-Federbelastung (86) aus dem axialen Weg der Schulter (24; 88) herausbewegt.

3. Vorrichtung nach Anspruch 2, **dadurch gekennzeichnet, dass** der Riegel aus einer federbelasteten Klinke (30; 80) besteht, wobei die Klinke (30; 80) außer einem mit der Schulter (21; 88) zusammenwirkenden Sperrarm (31; 81) einen damit drehfesten Lösearm (32) besitzt,
und **dass** der Lösearm (32; 83) mit einem Antrieb (48), wie einem elektrischen Hubmagneten (48), verbunden ist, der von der elektrischen Steuereinheit gesteuert wird.

4. Vorrichtung nach einem der Ansprüche 1 bis 3, **dadurch gekennzeichnet, dass** in der Aufnahme (11) elektronische Identifikationsmittel für den Schlüssel (50) angeordnet sind, die mit der elektrischen Steuereinheit in Wirkverbindung stehen,
und **dass** bei Ermittlung eines falschen Schlüssels (50) der Antrieb (48) für die Klinke (30; 80) wirksamgesetzt wird und den Riegel freigibt,
wodurch der falsche Schlüssel (50) von der Rückstellfederkraft (41) in seine Anfangslage (50.1) in der Aufnahme (11) zurückgeschoben wird.

5. Vorrichtung nach Anspruch 4, **dadurch gekennzeichnet, dass** die elektronischen Identifikationsmittel aus einem Transponder (43) bestehen.

6. Vorrichtung nach einem der Ansprüche 2 bis 5, **dadurch gekennzeichnet, dass** die Klinke (80) des Richtgesperres einen drehfest mit dem Sperr- und Lösearm (81, 83) ausgebildeten Stellarm (82) aufweist
und der Stellarm (82) auf einen Klinken-Sensor (72) einwirkt.

7. Vorrichtung nach Anspruch 6, **dadurch gekennzeichnet, dass** die Sperrstellung der Klinke (80) durch die Klinken-Federbelastung (85) und gegebenenfalls einen Drehanschlag bestimmt ist,
**dass** die Sperrstellung sowohl bei herausgezogenem Schlüssel (50), also bei leerer Aufnahme (11), als auch bei einem in der Mittellage (50.2) und in der Endlage (50.3) befindlichen Schlüssel (50) vorliegt
und **dass** der Klinken-Sensor (72) vom Stellarm (82) zwar in der Sperrstellung der Klinke (80) betätigt wird,
aber in der Anfangslage (50.1) des Schlüssels (50) die Klinke (80) von einem Profilabschnitt (79) des Schlüssel-Umrissprofils (68) aus ihrer Sperrstellung gegen die Klinken-Federbelastung (86) verschwenkt (80') ist und den Klinken-Sensor (72) freigibt.

8. Vorrichtung nach Anspruch 7, **dadurch gekennzeichnet, dass** die Aufnahme (11) außer dem Klinken-Sensor (72) einen ebenfalls mit der Steuereinheit in Verbindung stehenden Schlüssel-Sensor (77) besitzt, der die Endlage (50.3) des Schlüssels (50) überwacht.

9. Vorrichtung nach einem der Ansprüche 1 bis 8, **dadurch gekennzeichnet, dass** die auf den Schlüssel (50) wirkende axiale Rückstellkraft (41) sich in Abhängigkeit von dessen Hublage (50.1, 50.2, 50.3) in der Aufnahme (11) stufenartig verändert
und **dass** die Rückstellkraft (41) in der Anfangslage (50.1) des Schlüssels (50) geringer als in der Mittellage (50.2) und der Endlage (50.3) ist.

10. Vorrichtung nach einem der Ansprüche 1 bis 9, **dadurch gekennzeichnet, dass** der zur Auswahl verschiedener Funktionen im Fahrzeug dienende manuelle oder pedale Betätiger (35) zwar in der Mittellage (50.2) des Schlüssels wirksam, aber in allen übrigen Lagen (50.0, 50.1, 50.3) des Schlüssels (50) unwirksam ist.

11. Vorrichtung nach einem der Ansprüche 1 bis 5 und 10 mit einer Aufnahme (11), deren Öffnung (13) normalerweise von einer federnden (15) Abdeckung (14) verschlossen (14.1) ist,
wobei die Abdeckung (14) beim Einstecken (59) vom Schlüssel (50) gegen die Abdeck-Federbelastung (15) weggedrückt (14.2) wird,
**dadurch gekennzeichnet ,**
**dass** die Abdeckung (14) Bestandteil eines im Gehäuse (10) der Aufnahme (11) axial beweglichen Schiebers (20) ist,
**dass** der Schieber (20) beim Einstecken (59) das Vorderstück (48) des Schlüssels (50) aufnimmt und der Schieber (20) sowohl die kraftschlüssig als auch formschlüssig auf den Schlüssel (50) einwirkenden Haltemittel (21. 22, 55) besitzt, wobei diese Haltemittel den Schlüssel (50) im Schieber (20) sichern,
**dass** der Schieber (20) durch die Axialbewegung (59) des Schlüssels (50) in verschiedene Axialpositionen (20.1, 20.2, 20.3) überführbar ist, welche die verschiedenen Hublagen (50.1, 50.2, 50.3) des Schlüssels (50) bestimmen,
und **dass** der Schieber (20) axial federbelastet (40) ist und dadurch auf den eingesteckten Schlüssel (50) ausgeübte Rückstellkraft (41) erzeugt,
und **dass** der Schieber (20) in seiner die Mittellage (50.2) des Schlüssels (50) bestimmenden mittleren Axialposition (50.2) von einem federnden Riegel (30) eines Richtgesperres festgehalten wird und dieses Richtgesperre mittelbar, über den Schieber (20), auf den Schlüssel (50) wirkt.

12. Vorrichtung nach Anspruch 11, **dadurch gekennzeichnet, dass** der Schieber (20) sowohl in der Anfangslage (50.1) des eingesteckten Schlüssels (50) als auch bei herausgezogenem Schlüssel sich in der gleichen Ausgangsposition (20.1) im Gehäuse (10) der Aufnahme (11) befindet.
und dass die Ausgangsposition (50.1) durch die auf den Schieber (20) wirkende axiale Federkraft (41) einerseits und einen Endanschlag (42) im Gehäuse (10) der Aufnahme (11) andererseits bestimmt ist.

13. Vorrichtung nach Anspruch 12, **dadurch gekennzeichnet, dass** die Abdeckung (14) für die Öffnung (13) der Aufnahme (11) ihrerseits zwischen zwei Stellungen (14.1, 14.2) im Schieber (20) axial verschieblich ist,
**dass** diese beiden Stellungen (14.1, 14.2) durch einen vorderen und einen hinteren Endanschlag (22, 29) im Schieber (20) bestimmt sind,
**dass** die Abdeck-Federbelastung (15) bestrebt ist, die Abdeckung (14) axial gegen den vorderen Endanschlag (22) zu drücken,
und **dass** der vordere Endanschlag (22) und die Abdeck-Federbelastung (15) die bei herausgezogenem Schlüssel (50) sich ergebende abdeckwirksame Ausschubstellung (14.1) der Abdeckung (14) an der Öffnung (13) bestimmen.

14. Vorrichtung nach Anspruch 13, **dadurch gekennzeichnet, dass** bei eingestecktem Schlüssel (50) die Abdeckung (14) sich in einer durch den hinteren Endanschlag (29) am Schieber (20) bestimmten Einschubstellung (14.2) befindet
und **dass** diese Einschubstellung (14.2) der Abdeckung (14) in allen drei axialen Hublagen des Schlüssels (50) vorliegt.

15. Vorrichtung nach einem der Ansprüche 11 bis 14, **dadurch gekennzeichnet, dass** die gleichen Halteelemente (21, 22, 55), welche die kraftschlüssige Verbindung zwischen dem Schlüssel (50) und dem Schieber (20) erzeugen, auch bei der formschlüssige Verbindung zwischen dem Schlüssel (50) und dem Schieber (20) beteiligt sind.

16. Vorrichtung nach Anspruch 15, **dadurch gekennzeichnet, dass** die am Schieber (20) befindlichen kraftschlüssigen Halteelemente (21, 22) einen federnden Vorsprung (22) aufweisen
**dass** dem Vorsprung (22) ein Gegenvorsprung (23) auf seiner dem Gehäuse (10) der Aufnahme (11) zugekehrten Rückseite zugeordnet ist,
**dass** dieser Gegenvorsprung (23) in der die Haltelage (50.1) des Schlüssels (50) kennzeichenden Ausgangsposition (20.1) des Schiebers (20) mit einer Aussparung (16) im Gehäuse (10) radial ausgerichtet ist, in welchen der Gegenvorsprung (23) federnd ausweicht, wenn der Schlüssel (50) eingesteckt (59) wird,
und **dass** dem Gegenvorsprung (23) eine radiale Stützfläche (19) im Gehäuse (10) zugeordnet ist, die das federnde Glied (22) radial versteift, wenn der Schieber (20) vom Schlüssel (50) aus seiner Ausgangsposition (20.1) in eine der tiefer gelegenen Axialpositionen (20.2, 20.3) weiterbewegt wird.

17. Vorrichtung nach einem der Ansprüche 10 bis 16, **dadurch gekennzeichnet, dass** der axialbewegliche Schieber (20) ein mit einer Dämpfungseinrichtung (60) versehen ist,
und **dass** die Dämpfungseinrichtung (60) die federbedingte (40) axiale Rückbewegung (57) des im Schieber (20) aufgenommenen Schlüssels (50) aus dessen Endlage (50.3), über die Mittellage (50.2), bis zur Anfangslage (50.1) bremst.

18. Vorrichtung nach einem der Ansprüche 1 bis 17, **dadurch gekennzeichnet, dass** die zur Unterscheidung der ausgewählten Funktion dienende Steuereinheit auch auf Betätigung bzw. Nichtbetätigung weiterer Steuerglieder im Fahrzeug anspricht, wie eine Fußbremse.

19. Vorrichtung nach einem der Ansprüche 1 bis 18, **dadurch gekennzeichnet, dass** die zur Unterscheidung der ausgewählten Funktionen dienende Steuereinheit auf eine Nicht-Betätigung weiterer Steuerglieder im Fahrzeug anspricht.

20. Vorrichtung nach einem der Ansprüche 1 bis 19, **dadurch gekennzeichnet, dass** der für die verschiedenen Funktionen im Kraftfahrzeug dienende Betätiger einen Taster (35) umfasst
und **dass** die elektrische Steuereinheit die Anzahl und/oder die Reihenfolge der verschiedenen Betätigungen (36) unterscheidet und dementsprechend die ausgewählten Funktionen im Kraftfahrzeug auslöst.

## Claims

1. Device for starting a motor of a motor vehicle by means of an electronic key (50), which optionally has the format of a cheque card,
comprising a receptacle (11) in the vehicle serving for insertion (59) of the key (50),
the key (50) inserted in the receptacle (11) being non-rotatable and longitudinally movable (51, 52, 53) at least between three axially staggered travel positions (50.1, 50.2, 50.3),
the key (50) in its end position (50.3) being axially spring-loaded (41) in the direction of its initial position (50.1) either directly or indirectly by a restoring spring (40), and
some of the three key travel positions (50.1, 50.2, 50.3) being monitored by sensors of a control unit and being used for controlling different functions of the motor,
**characterized in that**
the key (50) in its centre position (50.2) is also axially spring-loaded (41) in the direction of its initial position (50.1) by a restoring spring (40), and
upon insertion (59) of the key (50) into the initial position (50.1) a latching lock mechanism (21, 22; 50; 70), and upon insertion (59) into the centre position (50.2) a directional lock mechanism (24; 30, 31; 80), which interacts indirectly (20) or directly with the key (50), can be automatically activated, and
the control unit responds to a single or repeated pressing action (59) of the key (50) between the centre position (50.2) into the end position (50.3) and deactivates the directional lock mechanism (24; 30, 31; 80) until the restoring spring force (41) has returned (57) the key (50) automatically into the initial position (50.1).

2. Device according to claim 1, **characterized in that**
the directional lock mechanism comprises a latch (30; 80) that is itself spring-loaded (85) and projects into the axial path (27) of a shoulder (24; 88) which can be entrained either directly or indirectly (20) by the key (50), and engages behind the shoulder (24; 88) in the end position (50.3) of the key (50)
and the control unit in a control situation moves the latch (30; 80) against its latch spring load (86) out of the axial path of the shoulder (24; 88).

3. Device according to claim 2, **characterized in that** the latch is comprised of a spring-loaded pawl (30; 80), the pawl (30; 80) having, in addition to a locking arm (31; 81) which interacts with the shoulder (21; 88), a release arm (32) which is torsionally rigid therewith, and the release arm (32; 83) is connected to a drive (48), such as an electric lifting magnet (48), which is controlled by the electrical control unit.

4. Device according to any one of claims 1 to 3, **characterized in that** there are disposed in the receptacle (11) electronic identification means for the key (50) which are actively connected to the electrical control unit,
and, upon detection of a wrong key (50), the drive (48) for the pawl (30; 80) is activated and releases the latch,
as a result of which the wrong key (50) is pushed back by the restoring spring force (41) into its initial position (50.1) in the receptacle (11).

5. Device according to claim 4, **characterized in that** the electronic identification means are comprised of a transponder (43).

6. Device according to any one of claims 2 to 5, **characterized in that** the pawl (80) of the directional lock mechanism has an actuating arm (82) which is torsionally rigid with the locking and release arm (81, 83)
and the actuating arm (82) acts on a pawl sensor (72).

7. Device according to claim 6, **characterized in that** the locking position of the pawl (80) is determined by the pawl spring load (85) and optionally a rotational stop,
the locking position is present both when the key (50) has been removed, i.e., when the receptacle (11) is empty, and when a key (50) is in the centre position (50.2) and in the end position (50.3)
and the pawl sensor (72) is actuated by the actuating arm (82) in the locking position of the pawl (80),
but, in the initial position (50.1) of the key (50), the pawl (80) is pivoted (80') by a profile section (79) of the circumferential profile (68) of the key from its locking position against the pawl spring load (86) and releases the pawl sensor (72).

8. Device according to claim 7, **characterized in that** the receptacle (11) has, in addition to the pawl sensor (72), a key sensor (77) which is likewise connected to the control unit and monitors the end position (50.3) of the key (50).

9. Device according to any one of claims 1 to 8, **characterized in that** the axial restoring force (41) acting on the key (50) varies in a step-wise manner in dependence on the travel position (50.1, 50.2, 50.3) of said key (50) in the receptacle (11)
and the restoring force (41) in the initial position (50.1) of the key (50) is smaller than in the centre position (50.2) and the end position (50.3).

10. Device according to any one of claims 1 to 9, **characterized in that** the manual or pedal actuator (35) serving for the selection of different functions in the vehicle is active in the centre position (50.2) of the key, but is inactive in all other positions (50.0, 50.1, 50.3) of the key (50).

11. Device according to any one of claims 1 to 5 and 10, with a receptacle (11), whose opening (13) normally is closed (14.1) by a spring-loaded (15) cover (14),
the cover (14) being pushed away (14.2) against the cover spring load (15) upon insertion (59) of the key (50),
**characterized in that**
the cover (14) is a component of a slide (20) which is axially movable within the housing (10) of the receptacle (11),
the slide (20), upon insertion (59), receives the forward piece (48) of the key (50) and the slide (20) comprises the holding means (21, 22, 55) that act both non-positively and positively on the key (50), these holding means securing the key (50) in the slide (20),
the slide (20) can be transferred by the axial movement (59) of the key (50) into different axial positions (20.1, 20.2, 20.3) which determine the different travel positions (50.1, 50.2, 50.3) of the key (50),
and the slide (20) is axially spring-loaded (40) and in this way generates restoring force (41) exerted on the inserted key (50),
and the slide (20), in its central axial position (50.2) determining the centre position (50.2) of the key (50) is secured by a spring-loaded latch (30) of a directional lock mechanism and this directional lock mechanism acts indirectly, via the slide (20), on the key (50).

12. Device according to claim 11, **characterized in that** the slide (20), both in the initial position (50.1) of the inserted key (50) and when the key has been removed, is positioned in the same initial position (20.1) in the housing (10) of the receptacle (11),
and the initial position (50.1) is determined by the axial spring force (41) acting on the slide (20), on the one hand, and an end stop (42) in the housing (10) of the receptacle (11), on the other hand.

13. Device according to claim 12, **characterized in that** the cover (14) for the opening (13) of the receptacle (11), in turn, is axially movable between two positions (14.1, 14.2) in the slide (20),
these two positions (14.1, 14.2) are determined by a forward and a rearward end stop (22, 29) in the slide (20),
the cover spring load (15) has the tendency to press the cover (14) axially against the forward end stop (22),
and the forward end stop (22) and the cover spring load (15) determine the closing ejection position (14.1) of the cover (14) at the opening (13), which position results when the key (50) is removed.

14. Device according to claim 13, **characterized in that**, when the key (50) is inserted, the cover (14) is positioned in an insertion position (14.2) determined by the rearward end stop (29) on the slide (20)
and this insertion position (14.2) of the cover (14) is present in all three axial travel positions of the key (50).

15. Device according to any one of claims 11 to 14, **characterized in that** the same holding elements (21, 22, 55) which generate the non-positive connection between the key (50) and the slide (20) also participate in the positive connection between the key (50) and the slide (20).

16. Device according to Claim 15, **characterized in that** the non-positive holding elements (21, 22) positioned on the slide (20) have a spring-loaded projection (22),
a counter-projection (23) is assigned to the projection (22), on its back side facing the housing (10) of the receptacle (11),
this counter-projection (23), in the initial position (20.1) of the slide (20) characterizing the securing position (50.1) of the key (50), is radially aligned with a recess (16) in the housing (10), into which recess the counter-projection (23) deflects resiliently when the key (50) is inserted (59),
there is assigned to the counter-projection (23) a radial support surface (19) in the housing (10), which support surface radially reinforces the spring-loaded member (22) when the slide (20) is moved by the key (50) farther from its initial position (20.1) into deeper axial positions (20.2, 20.3).

17. Device according to any one of claims 10 to 16, **characterized in that** the axially movable slide (20) is provided with a damping device (60),
and the damping device (60) brakes the spring-induced (40) axial return movement (57) of the key (50) received in the slide (20) out of its end position (50.3), via the centre position (50.2), to the initial position (50.1).

18. Device according to any one of claims 1 to 17, **characterized in that** the control unit serving for differentiation of the selected functions also responds to actuation or non-actuation of further control members in the vehicle, such as a footbrake.

19. Device according to any one of claims 1 to 18, **characterized in that** the control unit serving for differentiation of the selected functions responds to a non-actuation of further control members in the vehicle.

20. Device according to any one of claims 1 to 19, **characterized in that** the actuator serving for the different functions in the motor vehicle comprises a pushbutton (35),
and the electrical control unit differentiates the number and/or the sequence of the different actuations (36) and triggers the selected functions in the motor vehicle accordingly.

## Revendications

1. Dispositif de démarrage d'un moteur de véhicule au moyen d'une clé (50) électronique, présentant le cas échéant un format de carte chèque,
avec un logement (11) dans le véhicule, logement servant à l'enfichage (59) de la clé (50),
où la clé (50) enfichée dans le logement (11) est déplaçable longitudinalement (51, 52, 53) de façon immobilisé en rotation et au moins entre deux positions de course (50.1, 50.2, 50.3) décalées axialement les unes par rapport aux autres,
la clé (50), lorsqu'elle est à sa position finale (50.3), est chargée élastiquement (41) axialement, soit directement, soit indirectement, dans la direction de sa position initiale (50.1), par un ressort de rappel (40), et
quelques unes des trois positions de course de clé (50.1, 50.2, 50.3) sont surveillées par des capteurs appartenant à une unité de commande et utilisées pour la commande de différentes fonctions du moteur,
**caractérisé en ce que**
la clé (50) est sollicitée élastiquement (41) axialement, également lorsqu'elle est à sa position médiane (50.2), dans la direction de sa position initiale (50.1), par un ressort de rappel (40), et
lors de l'insertion (59) de la clé (50) à la position initiale (50.1), un verrou d'encliquetage (21, 22 ; 50 ; 70) et lors de l'insertion (59) à la position médiane (50.2), un verrou de direction (24 ; 30, 31 ; 80), coopérant indirectement (20) ou directement avec la clé (50), est mis en action automatiquement, et
**en ce que** l'unité de commande réagit à une insertion (59), initiale ou faite à plusieurs reprises, de la clé (50) entre la position médiane (50.2) pour aller à la position finale (50.3) et met hors d'action le verrou de direction (24 ; 30, 31 ; 80) jusqu'à ce que la force élastique de rappel (41) ait automatiquement rappelé (57) la clé (50) à la position initiale (50.1).

2. Dispositif selon la revendication 1, **caractérisé**
**en ce que** le verrou de direction présente un pêne (30; 80), chargé élastiquement (85) de son côté, pêne qui pénètre dans la trajectoire axiale (27) d'un épaulement (24; 88), mobile conjointement, soit directement soit indirectement, (20) avec la clé (50), et saisit par l'arrière l'épaulement (24; 88) lorsque la clé (50) est à la position finale (50.3),
et **en ce que**, en cas de commande, l'unité de commande sort le pêne (30; 80) de la trajectoire axiale de l'épaulement (24; 88), ceci à l'encontre de sa sollicitation élastique de pêne (86).

3. Dispositif selon la revendication 2, **caractérisé en ce que** le pêne est formé d'un cliquet (30 ; 80) chargé par un ressort, le cliquet (30; 80) comportant, outre un bras de blocage (31 ; 81) coopérant avec l'épaulement (21; 88), un bras de désolidarisation (32) assujetti en rotation avec lui,
et **en ce que** le bras de désolidarisation (32; 83) est relié à un dispositif d'entraînement (48), tel qu'un aimant de manoeuvre (48) électrique, commandé par l'unité de commande électrique.

4. Dispositif selon l'une des revendications 1 à 3, **caractérisé en ce que** des moyens d'identification électroniques sont disposés dans le logement (11) pour la clé (50) et sont reliés fonctionnellement à l'unité de commande électrique,
et **en ce que**, lors de la détermination d'une fausse clé (50), le dispositif d'entraînement (48) du cliquet (30; 80) est mis en action et libère le pêne,
faisant que la fausse clé (50) est ramenée dans le logement (11), à sa position initiale (50.1), par la force élastique de rappel (41).

5. Dispositif selon la revendication 4, **caractérisé en ce que** les moyens d'identification électroniques sont formés d'un transpondeur (43).

6. Dispositif selon l'une des revendications 2 à 5, **caractérisé en ce que** le cliquet (80) du verrou de direction présente un bras de réglage (82) assujetti en rotation au bras de blocage et de désolidarisation (81, 83),
et le bras de réglage (82) agit sur un capteur de cliquet (72).

7. Dispositif selon la revendication 6, **caractérisé en ce que** la position de blocage du cliquet (80) est déterminée par la sollicitation élastique de cliquet (85) et, le cas échéant, par une butée de rotation
**en ce que** la position de blocage se manifeste tant lorsque la clé (50) est extraite, qu'également lorsque le logement (11) est vide, ainsi qu'également dans le cas d'une clé (50) se trouvant en position médiane (50.2) et en position finale (50.3),
et **en ce que** le capteur de cliquet (72) est actionné par le bras de réglage (82), précisément lorsque le cliquet (80) est à la position de blocage,
mais, lorsque la clé (50) est en position initiale (50.1), le cliquet (80) est pivoté (80') de sa position de blocage, à l'encontre de la sollicitation élastique de cliquet (86), par un tronçon profilé (79) du profil d'entourage de clé (68), et libère le capteur de cliquet (72).

8. Dispositif selon la revendication 7, **caractérisé en ce que** le logement (11) comporte, outre le capteur de cliquet (72), un capteur de clé (77) également relié à l'unité de commande, capteur de clé surveillant la position finale (50.3) de la clé (50).

9. Dispositif selon l'une des revendications 1 à 8, **caractérisé en ce que** la force de rappel (41) axiale agissant sur la clé (50) varie par degrés en fonction de sa position de course (50.1, 50.2, 50.3) dans le logement (11),
et **en ce que** la force de rappel (41), lorsque la clé (50) est en position initiale (50.1), est inférieure à ce qu'elle est à la position médiane (50.2) et à la position finale (50.3).

10. Dispositif selon l'une des revendications 1 à 9, **caractérisé en ce que** l'actionneur (35), par action manuelle ou par pédale, servant à sélectionner différentes fonctions dans le véhicule, est certes efficace lorsque la clé est à la position médiane (50.2), mais est inefficace dans toutes les autres positions (50.0, 50.1, 50.3) de la clé (50).

11. Dispositif selon l'une des revendications 1 à 5 et 10, avec un logement (11) dont l'ouverture (13) est normalement fermée (14.1) par un couvercle (14) soumis à un effet élastique (15),
le couvercle (14) étant écarté par pression (14.2), à l'encontr de la sollicitation élastique de couvercle (15), lors de l'enfichage (59) de la clé (50),
**caractérisé en ce que**
le recouvrement (14) fait partie d'un coulisseau (20) mobile axialement dans le boîtier (10) du logement (11),
**en ce que**, lors de l'enfichage (59), le coulisseau (20) loge l'élément avant (48) de la clé (50), et le coulisseau (20) comporte des moyens de maintien (21, 22; 55) agissant sur la clé (50) par interaction de force, ainsi qu'également par ajustement de forme, ces éléments de maintien assurant la clé (50) dans le coulisseau (20),
**en ce que** le coulisseau (20) est transférable, par le déplacement axial (59) de la clé (50), en différentes positions axiales (20.1, 20.2, 20.3) qui déterminent les différentes positions de course (50.1, 50.2, 50.3) de la clé (50),
et **en ce que** le coulisseau (20) est sollicité élastiquement (40) axialement et génère de ce fait une force de rappel (41) exercée sur la clé (50) enfichée,
et **en ce que** le coulisseau (20), lorsqu'il est à sa position axiale (50.2) médiane, déterminant la position médiane (50.2) de la clé (50), est maintenu bloqué par un pêne (30) élastique d'un verrou de direction, et ce verrou de direction agissant indirectement par l'intermédiaire du coulisseau (20) sur la clé (50).

12. Dispositif selon la revendication 11, **caractérisé en ce que**, tant à la position initiale (50.1) de la clé (50) enfichée, ainsi qu'également lorsque la clé est extraite, le coulisseau (20) se trouve à la même position initiale (20.1) dans le boîtier (10) du logement (11),
et **en ce que** la position initiale (50.1) est déterminée, d'une part, par la force élastique (41) axiale agissant sur les coulisseaux (20) et, d'autre part, par une butée de fin de course (42) dans le boîtier (10) du logement (11).

13. Dispositif selon la revendication 12, **caractérisé en ce que** le couvercle (14), prévu pur l'ouverture (13) du logement (11), est, de son côté, mobile axialement dans le coulisseau (20), entre deux positions de réglage (14.1, 14.2),
**en ce que** ces deux positions (14.1, 14.2) sont déterminées par une butée de fin de course (22, 29) avant et une arrière,
**en ce que** la sollicitation élastique de couvercle (15) vise à presser le couvercle (14) axialement contre la butée de fin de course avant (22),
et **en ce que** la butée de course avant (22) et la sollicitation élastique de couvercle (15) déterminent la position d'extraction (14.1) du couvercle (14) sur l'ouverture (13), produisant un effet de découvrement lorsque la clé (50) est extraite.

14. Dispositif selon la revendication 13, **caractérisé en ce que**, lorsque la clé (50) est enfichée, le couvercle (14) se trouve à une position d'insertion (14.2) déterminée par la butée de fin de course arrière (29) sur le coulisseau (20),
et **en ce que** cette position d'insertion (14.2) du couvercle (14) est prise pour la totalité des trois positions de course axiale de la clé (50).

15. Dispositif selon l'une des revendications 11 à 14, **caractérisé en ce que** les mêmes éléments de maintien (21, 22, 55), produisant la liaison à interaction de force entre la clé (50) et le coulisseau (20), sont également impliqués dans la liaison avec ajustement de forme entre la clé (50) et le coulisseau (20).

16. Dispositif selon la revendication 15, **caractérisé en ce que** les éléments de maintien (21, 22) à liaison par interaction de force qui se trouvent sur le coulisseau (20) présentent une saillie (22) à effet élastique,
**en ce que**, à la saillie (22) est associée une saillie conjuguée (23), sur la face arrière tournée vers le boîtier (10) du logement (11)
**en ce que** cette saillie conjuguée (23), à la position initiale (20.1), caractérisant la position de maintien (50.1) de la clé (50), du coulisseau (20) est orientée radialement par rapport à un évidement (16) ménagé dans le boîtier (10), dans lequel la saillie conjuguée (23) s'échappe élastiquement lorsque la clé (50) est enfichée (59),
et **en ce qu'**est associée à la saillie conjuguée (23) une surface d'appui (19) radiale ménagée dans le boîtier (10), qui rigidifie radialement l'organe élastique (22) lorsque le coulisseau (20) est écarté par la clé (50) de sa position initiale (20.1) en une des positions axiales (20.2, 20.3) plus profonde.

17. Dispositif selon l'une des revendications 10 à 16, **caractérisé en ce que** le coulisseau (20) mobile axialement est muni d'un dispositif d'amortissement (60),
et **en ce que** le dispositif d'amortissement (60) freine le déplacement de rappel (57) axial, d'origine élastique (40), de la clé (50) logée dans le coulisseau (20), le déplacement la faisant passer de sa position finale (50.3) à sa position initiale (50.1), en passant par la position médiane (50.2).

18. Dispositif selon l'une des revendications 1 à 17, **caractérisé en ce que** l'unité de commande, servant à distinguer la fonction sélectionnée, réagit également à l'actionnement ou au non actionnement d'autres organes de commande installés dans le véhicule, tel qu'un frein à pied.

19. Dispositif selon l'une des revendications 1 à 18, **caractérisé en ce que** l'unité de commande servant à la distinction des fonctions sélectionnées réagit à un non actionnement d'autres organes de commande installés dans le véhicule.

20. Dispositif selon l'une des revendications 1 à 19, **caractérisé en ce que** l'actionneur servant aux différentes fonctions dans le véhicule automobile comprend un palpeur (35),
et **en ce que** l'unité de commande électrique fait la distinction entre le nombre et/ou l'ordre de succession des différents actionnements (36) et, de manière correspondante, déclenche dans le véhicule automobile les fonctions ayant été sélectionnées.
